# EUROPÄISCHE PATENTANMELDUNG

(11) **EP 3 396 140 A1**
(43) Veröffentlichungstag der Anmeldung: **31.10.2018**
(21) Anmeldenummer: 18166246.1
(22) Anmeldetag: 09.04.2018
(51) Int. Cl.: F02D 41/22, F02D 41/38, F02D 41/30, F02D 33/00, F02D 41/00

(54) **VERFAHREN ZUR ANSTEUERUNG EINES KRAFTSTOFFFÖRDERMODULS SOWIE KRAFTSTOFFFÖRDERMODUL**

(30) Priorität: 12.04.2017 DE 102017107907
(71) Anmelder: VOLKSWAGEN AKTIENGESELLSCHAFT, 38440 Wolfsburg (DE)
(72) Erfinder: Richter, Sebastian, 38104 Braunschweig (DE)
(74) Vertreter: Gulde & Partner

(57) **Zusammenfassung**

Die Erfindung betrifft ein Verfahren zur Ansteuerung eines Kraftstofffördermoduls zur Versorgung eines Kraftstoffeinspritzsystems eines Verbrennungsmotors. Das Kraftstofffördermodul umfasst dabei eine elektronische Kraftstoffpumpe, einen Temperatursensor, einen Drucksensor sowie eine Kraftstoffleitung, mit welcher die elektronische Kraftstoffpumpe mit einer Hochdruckpumpe des Kraftstoffeinspritzsystems verbindbar ist. Bei dem Verfahren werden die Kraftstofftemperatur, der Kraftstoffdruck und ein Phasenstrom der elektronischen Kraftstoffpumpe erfasst und an ein Steuergerät weitergeleitet. In dem Steuergerät wird dann anhand der ermittelten Daten erkannt, ob ein Druckanstieg in dem Kraftstofffördermodul aus einer Versulzung zumindest eines Abschnitts des Kraftstofffördermoduls oder einer Fehlfunktion des Kraftstofffördermoduls, insbesondere einem Abknicken einer Vorlaufleitung zwischen der elektronischen Kraftstoffpumpe und der Hochdruckpumpe, resultiert. Im Falle einer Versulzung wird die Pumpendrehzahl der elektronischen Kraftstoffpumpe derart begrenzt, dass der Druck in dem Kraftstofffördermodul nicht über einen definierten Schwellenwert ansteigt. Ferner wird ein Kraftstofffördermodul vorgeschlagen, welches eingerichtet ist, ein solches Verfahren durchzuführen.

## Beschreibung

Die Erfindung betrifft ein Verfahren zur Ansteuerung eines Kraftstofffördermoduls zur Versorgung eines Kraftstoffeinspritzsystems eines Verbrennungsmotors sowie ein solches Kraftstofffördermodul gemäß dem Oberbegriff der unabhängigen Ansprüche.

Kraftfahrzeuge mit Verbrennungsmotoren sind seit mehr als 100 Jahren hinlänglich bekannt. Bei der Entwicklung von Kraftfahrzeugen werden diese von den Herstellern unter extremen klimatischen Bedingungen getestet, um einen störungsfreien Betrieb in allen Teilen der Welt zu ermöglichen. Dabei ergibt sich das Problem, dass bestimmte Betriebsstoffe, insbesondere Dieselkraftstoff, bei niedrigen Temperaturen eine stark erhöhte Viskosität aufweisen, sodass das Fördern dieser Kraftstoffe durch entsprechende Pumpen erschwert wird. Bei Kraftfahrzeugen mit einem Dieselmotor ergibt sich das Problem, dass sich in Abhängigkeit der Kraftstoffzusammensetzung und der dem Kraftstoff beigemischten Additive der Kraftstoff unterhalb von einer Schwellentemperatur, dem sogenannten "Cloud Point" (einem Kraftstoffkennwert, bei dem eine Trübung aufgrund von Paraffinbildung beginnt) die Viskosität des Kraftstoffs stark erhöht und der Kraftstoff ausflockt. Dabei kann es dazu kommen, dass sich diese Ausflockungen in einem Kraftstofffilter zwischen dem Tank und der Kraftstoffhochdruckpumpe ablagern, und das Kraftstoffeinspritzsystem nicht mehr oder nur noch unzureichend mit Kraftstoff versorgt werden kann. Dies führt dazu, dass das Kraftfahrzeug nicht mehr gestartet werden kann oder der Motor kurzzeitig nach dem Start wieder abstirbt und sich das Fahrzeug nicht mehr starten lässt. Durch ein elektrisches Beheizen sämtlicher Komponenten des Niederdruck-Kreislaufs eines Kraftstoffeinspritzsystems lässt sich dieses Problem lösen, dies ist jedoch sehr aufwendig und sehr teuer. Zudem sinkt die Leistungsfähigkeit der Fahrzeugbatterie bei niedrigen Temperaturen stark ab, sodass das elektrische Aufheizen des Niederdruck-Kreislaufs eine zusätzliche Belastung für die Batterie bedeutet. Ferner kann es, insbesondere bei schlechter Kraftstoffqualität, dazu kommen, dass sich im Niederdruckkreislauf der Kraftstoffversorgung Ablagerungen bilden, welche ebenfalls das Fördern des Kraftstoffes aus dem Tank zur Hochdruckpumpe erschweren.

Beim Betrieb des Verbrennungsmotors wird der Kraftstoff mittels eines Kraftstofffördermoduls mit einer elektronischen Kraftstoffpumpe aus dem Tank zu einer Hochdruckpumpe gefördert, mit welcher der Kraftstoff bis auf den Einspritzdruck verdichtet wird. Dabei liegt der Einspritzdruck bei modernen Diesel-Hochdruckeinspritzpumpen im Bereich von 2000bar bis 2500bar, wobei der Kraftstoff durch die Verdichtung derart stark erwärmt wird, dass er unter allen Betriebsbedingungen eine niedrige Viskosität aufweist und in die Brennräume des Verbrennungsmotors eingespritzt werden kann.

Im Bereich der elektronischen Kraftstoffpumpe treten Förderdrücke von 3 bis 10 bar auf, wobei ein Anstieg der Viskosität des Kraftstoffs zu einem erheblichen Anstieg des Förderdrucks der elektronischen Kraftstoffpumpe führen kann. Daher muss dieser Anstieg begrenzt werden, um eine Beschädigung der Komponenten des Kraftstoff-Niederdruck-Kreislaufes zu vermeiden.

Aus dem Stand der Technik ist ein Druckbegrenzungsventil bekannt, welches an einer Kraftstoffleitung zwischen der elektronischen Kraftstoffpumpe und der Hochdruckpumpe angeordnet ist, und welches ab einem bestimmten Druck öffnet. Dazu muss das Druckbegrenzungsventil derart robust ausgelegt werden, dass es über die Lebensdauer des Kraftfahrzeuges trotz abrasiver Partikel keinen unzulässig hohen Verschleiß aufweist und eine hohe Genauigkeit bezüglich des Öffnungs- und Schließverhaltens sowie zur Anpassung des Drucks über den Volumenstrom aufweist.

Aus der DE 10 2014 222 398 A1 ist ein Verfahren zum Betreiben einer drehzahlgeregelten Kraftstoffpumpe bekannt, wobei ein elektrisches Ansteuersignal der Kraftstoffpumpe und ein maximal zulässiger Betriebsdruck an ein Steuergerät weitergegeben werden, wobei die maximale Pumpendrehzahl angepasst wird, wenn der Druck ein bestimmtes Druckniveau übersteigt. Nachteilig an dieser Lösung ist jedoch, dass bei diesem Verfahren nicht zwischen einem Druckanstieg durch eine Beschädigung des Niederdruck-Kreislaufes, beispielsweise einer abgeknickten Versorgungsleitung und einem Druckanstieg durch eine Erhöhung der Viskosität des Kraftstoffes unterschieden werden kann.

Aus der US 8707932 B1 sind eine Kraftstoffförderpumpe und ein Verfahren zum Betreiben eines solchen Kraftstoffförderpumpe bekannt, wobei die Förderleistung der Kraftstoffpumpe durch einen geschlossenen Regelkreis kontrolliert wird und in einer Anlaufphase kontinuierlich bis zu den zulässigen Randbedingungen hochgefahren wird.

Der Erfindung liegt nun die Aufgabe zugrunde, eine Fehlfunktion des Kraftstofffördermoduls von einem betriebsbedingten zulässigen Druckanstieg unterscheiden zu können und die Kosten für des Kraftstofffördermodul zu reduzieren.

Erfindungsgemäß wird die Aufgabe durch ein Verfahren zur Ansteuerung eines Kraftstofffördermodul zur Versorgung einer Kraftstoffhochdruckpumpe eines Kraftstoffeinspritzsystems für einen Verbrennungsmotors gelöst, wobei das Kraftstofffördermodul eine elektronische Kraftstoffpumpe, einen Temperatursensor und einen Drucksensor umfasst, und wobei die elektronische Kraftstoffpumpe, der Temperatursensor und der Drucksensor über Signalleitungen mit einem Steuergerät verbunden sind, welches folgende Schritte umfasst:
- Erfassen eines Phasenstroms der elektronischen Kraftstoffpumpe,
- Erfassen einer Kraftstofftemperatur des Kraftstoffs,
- Erfassen eines Kraftstoffdruckes stromaufwärts der Kraftstoffhochdruckpumpe, wobei
- aus den erfassten Daten eine Diagnose des Kraftstofffördermoduls durchgeführt wird, und wobei
- zwischen einem Druckanstieg durch eine Fehlfunktion des Kraftstofffördermoduls, und einem Druckanstieg durch eine Versulzung zumindest eines Abschnitts des Kraftstofffördermoduls unterschieden wird.
Durch das erfindungsgemäße Verfahren ist die Verwendung eines einfacheren Druckbegrenzungsventils möglich, da die Anforderungen gegenüber an das Druckbegrenzungsventil im Vergleich zu einer rein mechanischen Druckregelventil deutlich reduziert werden können. Somit lassen sich die Kosten für das Kraftstofffördermodul reduzieren. Die elektromechanische Druckregelung über die elektronische Kraftstoffpumpe des Kraftstofffördermoduls kann auf Basis der Messgrößen "Druck", "Temperatur" des Kraftstoffes und "Phasenstrom" der elektronischen Kraftstoffpumpe erfolgen.

Durch die in den abhängigen Ansprüchen aufgeführten Merkmale sind vorteilhafte Verbesserungen und Weiterentwicklungen des im unabhängigen Anspruch angegebenen Verfahrens zur Ansteuerung eines Kraftstofffördermoduls möglich.

In bevorzugter Ausgestaltung der Erfindung ist vorgesehen, dass bei Erkennen einer Versulzung zumindest eines Abschnitts des Kraftstofffördermoduls die Pumpendrehzahl derart begrenzt wird, dass der Druck in dem Kraftstofffördermodul auf einen definierten ersten Schwellenwert begrenzt wird. Dabei erfolgt im zulässigen Betrieb des Kraftstofffördermoduls eine elektromechanische Druckbegrenzung durch die Reduzierung der Drehzahl und damit verbunden der Förderleistung der elektronischen Kraftstoffpumpe. Dabei erfolgt die Drehzahlregelung unter Verwendung der gemessenen Kenngrößen "Druck", "Temperatur" und "Phasenstrom", wodurch eine Erhöhung der Viskosität des Kraftstoffes, insbesondere durch eine Versulzung, ermittelt werden kann. Die Begrenzung der maximalen Pumpendrehzahl der elektronischen Kraftstoffpumpe erfolgt dabei durch eine Betrachtung mindestens einer Pumpenkennlinie.

Bevorzugt ist dabei, wenn der erste Schwellenwert im Bereich von 600 kPa und 1000 kPa liegt. Um eine Beschädigung der Komponenten des Kraftstofffördermoduls, insbesondere der elektronischen Kraftstoffpumpe, auszuschließen, ist es vorteilhaft, wenn der erste Schwellenwert im Bereich von 6 bar bis 10 bar, und somit geringfügig oberhalb eines normalen Betriebsdrucks des Kraftstofffördermoduls liegt. Höhere Drücke würden entweder einen höheren Verschleiß und damit eine geringere Lebensdauer oder konstruktive Änderungen an dem Kraftstofffördermodul bedingen, welche zu einer deutlichen Kostenerhöhung an dem Kraftstofffördermodul führen.

In weiterer bevorzugter Ausgestaltung der Erfindung ist vorgesehen, dass bei einem Druckanstieg über einen zweiten Schwellenwert, welcher oberhalb des ersten Schwellenwertes liegt, eine Fehlfunktion des Kraftstofffördermoduls erkannt wird. Steigt der Druck in dem Kraftstofffördermodul oder einer mit dem Kraftstofffördermodul verbundenen Vorlaufleitung, welche das Kraftstofffördermodul mit einer Kraftstoffhochdruckpumpe des Kraftstoffeinspritzsystem verbindet, trotz Reduzierung der Förderleistung, insbesondere der Pumpendrehzahl der elektronischen Kraftstoffpumpe, weiter an, so wird durch das Steuergerät eine Fehlfunktion des Kraftstofffördermoduls erkannt. In diesem Falle kann eine Fehlermeldung an eine Informationseinheit und/oder einen Fehlerspeicher weitergegeben werden und die Förderung des Kraftstoffes eingestellt werden, um eine weitere Beschädigung des Kraftstofffördermoduls oder der damit verbundenen Komponenten zu vermeiden. Dies ist insbesondere der Fall, wenn die Vorförderleitung komplett verschlossen ist oder durch ein Abknicken derart gesperrt ist, dass kein oder nur noch ein minimaler Kraftstofffluss zwischen dem Kraftstofffördermodul und der Hochdruckpumpe möglich ist.

In einer weiteren Verbesserung des Verfahrens ist vorgesehen, dass die Begrenzung der Pumpendrehzahl anhand von zumindest einer in dem Steuergerät abgelegten Pumpenkennlinie erfolgt. Aus den Kenngrößen "Temperatur" und "Druck" des Kraftstoffs sowie Phasenstrom der elektronischen Kraftstoffpumpe kann ein Kennfeld ermittelt werden, welches jedem Kraftstofffördervolumen bei jeder Temperatur einen entsprechenden Phasenstrom zuordnet.

Dabei kann das Kraftstofffördervolumen aus dem ermittelten Kraftstoffdruck abgeleitet werden. Erkennt das Steuergerät eine Abweichung von diesem Kennfeld, so kann die Pumpendrehzahl der elektronischen Kraftstoffpumpe reduziert und eine Diagnose durchgeführt werden, um zu ermitteln, ob es sich um eine Viskositätserhöhung durch Versulzung oder eine Beschädigung des Kraftstofffördermoduls handelt.

In einer bevorzugten Ausführungsform des Verfahrens ist vorgesehen, dass der erste Schwellenwert zur Begrenzung der Pumpendrehzahl aus einem Schnittpunkt der Kennlinien einer Saugstrahlpumpe und einer Pumpenkennlinie der elektronischen Kraftstoffpumpe ermittelt wird. Bevorzugt ist der elektronischen Kraftstoffpumpe tankseitig eine Saugstrahlpumpe vorgeschaltet, wobei sich aus einem Schnittpunkt der Kennlinien der Saugstrahlpumpe und der elektronischen Kraftstoffpumpe eine Auslegung der maximale Pumpendrehzahl der elektronischen Kraftstoffpumpe erfolgt.

Bevorzugt ist dabei, wenn zur Ermittlung der Pumpenkennlinie mehrere Stützpunkte in einem Temperaturbereich unterhalb von 0°C, insbesondere im Bereich des Cloud Points, ausgewertet werden. Da die Viskosität des Kraftstoffs im Bereich des Cloud Points besonders stark ansteigt, sind gerade in diesem Bereich Stützpunkte bei der Ermittlung der Kennlinien bzw. des Kennfelds besonders aussagekräftig.

Gemäß einer weiteren Verbesserung des Verfahrens ist vorgesehen, dass oberhalb des zweiten Schwellenwertes ein Druckbegrenzungsventil des Kraftstofffördermoduls geöffnet wird. Steigt der Druck im Kraftstofffördermodul oder in der Vorlaufleitung über den ersten Schwellenwert hinaus bis auf einen zweiten Schwellenwert, öffnet das Druckbegrenzungsventil, sodass der von der elektronischen Kraftstoffpumpe aufgebaute Druck abgebaut und eine Beschädigung des Kraftstofffördermoduls oder der Vorlaufleitung vermieden wird.

Gemäß einer weiteren Verbesserung des Verfahrens ist vorgesehen, dass ein Volumenstrom durch die elektronische Kraftstoffpumpe erfasst wird. Durch eine Erfassung eines Volumenstroms durch die elektronische Kraftstoffpumpe ist eine verbesserte Regelung der Kraftstoffpumpe möglich.

Erfindungsgemäß wird ein Kraftstofffördermodul zur Versorgung einer Kraftstoffhochdruckpumpe eines Kraftstoffeinspritzsystems für einen Verbrennungsmotor vorgeschlagen, wobei das Kraftstofffördermodul eine elektronische Kraftstoffpumpe, einen Temperatursensor, einen Drucksensor und eine Versorgungsleitung umfasst, welche die elektronische Kraftstoffpumpe mit einer Hochdruckpumpe des Kraftstoffeinspritzsystems fluidisch verbindet. Das Kraftstofffördermodul ist durch ein Steuergerät ansteuerbar, welches mit dem vorgeschlagenen Kraftstofffördermodul ein erfindungsgemäßen Verfahren zur Ansteuerung eines Kraftstofffördermoduls ausführt, wenn ein maschinenlesbarer Programmcode durch das Steuergerät ausgeführt wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erfindungsgemäßes Kraftstofffördermodul zur Kraftstoffversorgung eines Kraftstoffeinspritzsystems eines Verbrennungsmotors;
- Figur 2: ein Diagramm zur Auslegung eines ersten Schwellenwertes, ab dem die Drehzahl einer elektronischen Kraftstoffpumpe des Kraftstofffördermoduls reduziert wird;
- Figur 3: ein Verfahrensschaubild zur Durchführung eines erfindungsgemäßen Verfahrens zur Ansteuerung eines Kraftstofffördermoduls.

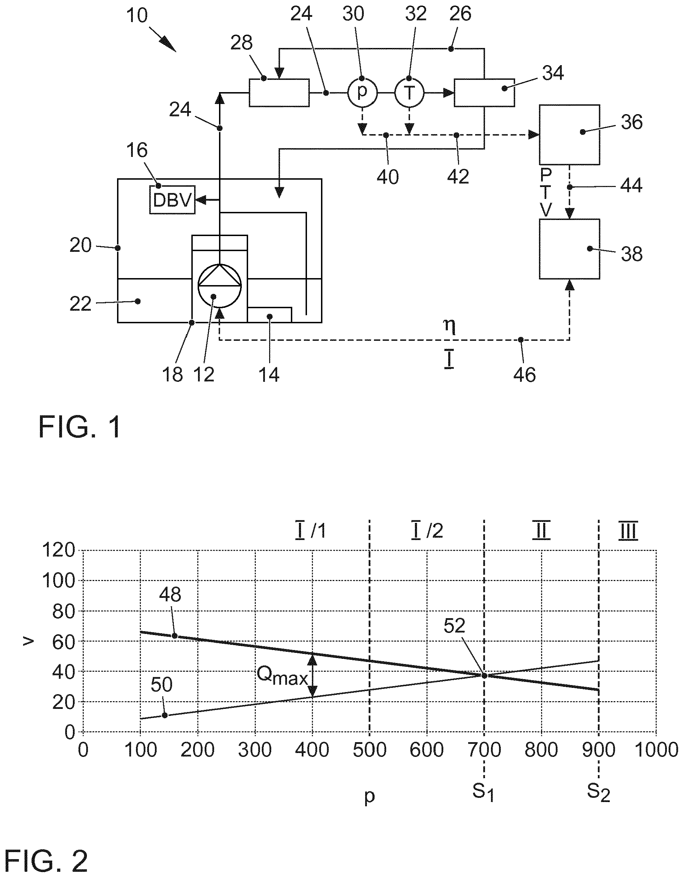

Figur 1 zeigt ein erfindungsgemäßes Kraftstofffördermodul 10. Das Kraftstofffördermodul 10 umfasst eine elektronische Kraftstoffpumpe 12, welcher mit einer Halterung 18 oder einem Stautopf in einem Kraftstofftank 20 eines Verbrennungsmotors befestigt ist. Das Kraftstofffördermodul 10 umfasst ferner eine Saugstrahlpumpe 14, welche der elektronischen Kraftstoffpumpe 12 zugeordnet ist. Das Kraftstofffördermodul 10 umfasst ferner ein Druckbegrenzungsventil 16, mit welchem ein Druck in einer Versorgungsleitung 24 zwischen der elektronischen Kraftstoffpumpe 12 und einer Kraftstoffhochdruckpumpe 34 eines Kraftstoffeinspritzsystems begrenzt werden kann. In der Versorgungsleitung 24 sind ein Kraftstofffilter 28, ein Drucksensor 30 und ein Temperatursensor 32 angeordnet. Der Drucksensor 30 und der Temperatursensor 32 sind über Signalleitungen 40, 42 mit einem Steuergerät 36, vorzugsweise mit dem Motorsteuergerät des Verbrennungsmotors, verbunden. Das Steuergerät 36 ist über eine weitere Signalleitung 44 mit der Pumpenelektronik 38 der elektronischen Kraftstoffpumpe 12 verbunden. Die Pumpenelektronik 38 ist über eine weitere Signalleitung 46 mit der elektronischen Kraftstoffpumpe 12 verbunden. Das erfindungsgemäße Kraftstofffördermodul 10 ist vorzugsweise zur Förderung von Dieselkraftstoff und zur Verwendung in einem Kraftfahrzeug mit einem mit Dieselkraftstoff betriebenen Verbrennungsmotor vorgesehen.

Die Kraftstoffhochdruckpumpe 34 ist über ein in der Kraftstoffhochdruckpumpe 34 integriertes Druckregelventil und eine Rücklaufleitung 26 mit dem Kraftstofffilter 28 verbunden. Ferner ist ein hochdruckseitiger Ausgang der Kraftstoffhochdruckpumpe 34 mit einem nicht dargestellten Hochdruckspeicher, welcher bei Dieseleinspritzsystemen auch als Rail bezeichnet wird, verbunden, welcher über ein ebenfalls nicht dargestelltes Druckregelventil oder ein Druckbegrenzungsventil und eine weitere Rücklaufleitung mit dem Kraftstofftank 20 verbunden ist.

Im Betrieb des Fördermoduls wird Kraftstoff 22 aus dem Kraftstofftank 20 durch die Saugstrahlpumpe angesaugt und der elektronischen Kraftstoffpumpe 12 zugeführt, wo der Kraftstoff 22 verdichtet wird und der Versorgungsleitung 24 zugeführt wird. Dabei wird der Kraftstoff 22 durch den Kraftstofffilter 28 geleitet und von Verunreinigungen befreit. Zusätzlich zu dem Kraftstofffilter 28 kann in der Versorgungsleitung 24 auch noch ein Wasserabscheider angeordnet sein, um den Kraftstoff 22 von Verunreinigungen durch in den Kraftstoff eingetragenen Wassers zu befreien. In der Versorgungsleitung 24 wird der Kraftstoffdruck p und die Kraftstofftemperatur T gemessen und die entsprechenden Messwerte über die Signalleitungen 40, 42 an des Steuergerät 36 weitergegeben. Ferner wird ein Phasenstrom I der elektronischen Kraftstoffpumpe 12 erfasst. Kommt es aufgrund von einer Versulzung von Kraftstoff zu einem Druckanstieg Δp über den Kraftstofffilter, so wird die Drehzahl der elektronischen Kraftstoffpumpe 12 derart begrenzt, dass der Kraftstoffdruck p nicht über einen ersten Schwellenwert S₁ von 600 kPa bis 1000 kPa, vorzugsweise von 700 kPa, steigt. Kommt es trotz einer Reduzierung der Pumpendrehzahl n zu einem weiteren Druckanstieg und steigt der Druck p in der Versorgungsleitung 24 über einen zweiten Schwellenwert S₂, von 800 kPa bis 1200 kPa so öffnet das Druckbegrenzungsventil 16 und der Kraftstoff 22 wird zurück in den Kraftstofftank 20 gefördert.

In Figur 2 ist ein Diagramm zur Auslegung der maximalen Pumpendrehzahl nₘₐₓ der elektronischen Kraftstoffpumpe 12 dargestellt. Dabei ist der Volumenstrom V (angegeben in Liter pro Stunde) über dem Druck p (angegeben in Kilopascal) anhand der Kennlinie 50 der Saugstrahlpumpe 14 und der Pumpenkennlinie 48 der elektronischen Kraftstoffpumpe 12 aufgetragen. Der Schnittpunkt 52 der Kennlinien 48, 50 stellt dabei eine Größe für die maximal zulässigen Druck pₘₐₓ und damit verbunden für die maximal zulässige Pumpendrehzahl nₘₐₓ der elektronischen Kraftstoffpumpe 12 dar, welche in dem gezeigten Ausführungsbeispiel bei etwa 700 kPa liegt. In einem ersten Bereich I ist der Kraftstofffilter 28 im Wesentlichen frei, sodass eine Förderung des Kraftstoffes 22 möglich ist. Dabei ist der Kraftstofffilter in einem ersten Teilbereich I / 1, vorzugsweise im Bereich von 100 kPa bis 500 kPa frei, während es in einer zweiten Teilbereich I / 2, vorzugsweise in einem Bereich von 500 kPa bis 700 kPa bereits zu einer leichten Versulzung des Kraftstofffilters 28 kommt, eine hinreichende Förderung des Kraftstoffs 22 jedoch möglich bleibt. In einem zweiten Bereich II hat sich der Kraftstofffilter 22 derart zugesetzt, dass keine hinreichende Förderung von Kraftstoff 22 mehr möglich ist. In einem dritten Bereich III liegt die Gefahr einer Beschädigung des Kraftstofffördermoduls 10 vor, sodass dieser dritte Bereich durch ein rechtzeitige Öffnen des Druckbegrenzungsventils 16 vermieden werden muss.

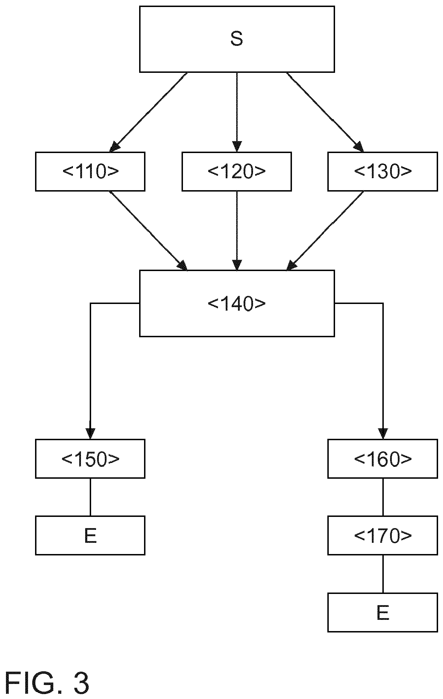

In Figur 3 ist ein Ablaufdiagramm für ein erfindungsgemäßes Verfahren zur Ansteuerung eines Kraftstofffördermoduls 10 zur Versorgung einer Kraftstoffhochdruckpumpe 34 eines Kraftstoffeinspritzsystems dargestellt. In einem ersten Verfahrensschritt <110> wird der Phasenstrom I der elektronischen Kraftstoffpumpe 12 erfasst. In einem zweiten Verfahrensschritt <120> welcher zeitgleich erfolgt, wird parallel zum Phasenstrom I die Kraftstofftemperatur T des Kraftstoffs 22 in der Versorgungsleitung 24 erfasst. In einem dritten Verfahrensschritt <130> wird zeitgleich der Kraftstoffdruck p des Kraftstoffs 22 in der Versorgungsleitung 24 erfasst. Die ermittelten Daten zum Phasenstrom I, dem Kraftstoffdruck p und der Kraftstofftemperatur T werden in einem darauffolgenden Verfahrensschritt <140> ausgewertet und unterschieden, ob eine Funktionsstörung des Kraftstofffördermoduls 10 vorliegt oder ob der Druckanstieg erlaubt ist und durch eine Erhöhung der Viskosität des Kraftstoffs 22 hervorgerufen wurde. Bei einem unzulässigen Druckanstieg, beispielsweise durch eine abgeknickte Versorgungsleitung 24 wird in einem Verfahrensschritt <150> das Druckbegrenzungsventil 16 geöffnet. Zusätzlich kann an einen Fehlerspeicher und/oder eine Informationseinheit des Kraftfahrzeuges ein Fehlersignal ausgegeben werden. Liegen zulässige Betriebsbedingungen für den Betrieb der elektronischen Kraftstoffpumpe 12, z.B. bei einem versulzten Kraftstofffilter 28, vor, so wird in einem Verfahrensschritt <160> die Drehzahl n der elektronischen Kraftstoffpumpe 12 derart reduziert, dass es zu keinem weiteren Anstieg des Drucks in der Versorgungsleitung 24 kommt. Dabei wird in einem Verfahrensschritt <170> überprüft, ob die Reduzierung der Pumpendrehzahl n zu der erwünschten Entwicklung des Drucks p in der Versorgungsleitung 24 geführt hat. Kommt es trotz einer Reduzierung der Pumpendrehzahl n zu einem weiteren Druckanstieg, insbesondere zu einem Druckanstieg über den zweiten Schwellenwert S₂, so wird auch bei Erkennen einer erlaubten Betriebsbedingung des Druckbegrenzungsventil 16 geöffnet, um eine Beschädigung des Kraftstofffördermoduls 10 zu vermeiden.

### Bezugszeichenliste

- 10: Kraftstofffördermodul
- 12: elektronische Kraftstoffpumpe
- 14: Saugstrahlpumpe
- 16: Druckbegrenzungsventil
- 18: Halterung / Stautopf
- 20: Tank
- 22: Kraftstoff
- 24: Versorgungsleitung / Vorlaufleitung
- 26: Rücklaufleitung von der Hochdruckpumpe zum Kraftstofffilter
- 28: Kraftstofffilter
- 30: Drucksensor
- 32: Temperatursensor
- 34: Kraftstoffhochdruckpumpe
- 36: Steuergerät
- 38: Pumpenelektronik
- 40: erste Signalleitung
- 42: zweite Signalleitung
- 44: dritte Signalleitung
- 46: vierte Signalleitung
- 48: Pumpenkennlinie der elektronischen Kraftstoffpumpe
- 50: Pumpenkennlinie der Saugstrahlpumpe
- 52: Schnittpunkt
- p: Kraftstoffdruck
- I: Phasenstrom
- T: Kraftstofftemperatur
- Δp: Druckanstieg

- I: Kraftstofffilter im Wesentlichen frei
- I / 1: Kraftstofffilter frei
- I / 2: Kraftstofffilter mit leichter Versulzung, Förderung von Kraftstoff jedoch möglich
- II: Kraftstofffilter verstopft
- III: Funktionsstörung / abgeknickte Versorgungsleitung

## Patentansprüche

1. Verfahren zur Ansteuerung eines Kraftstofffördermodul (10) zur Versorgung einer Kraftstoffhochdruckpumpe (34) eines Kraftstoffeinspritzsystems für einen Verbrennungsmotors, wobei das Kraftstofffördermodul (10) eine elektronische Kraftstoffpumpe (12), einen Temperatursensor (32) und einen Drucksensor (30) umfasst, und wobei die elektronische Kraftstoffpumpe (12), der Temperatursensor (32) und der Drucksensor (30) über Signalleitungen (40, 42) mit einem Steuergerät (36) verbunden sind, umfassend folgenden Schritte:
- Erfassen eines Phasenstroms (I) der elektronischen Kraftstoffpumpe (12),
- Erfassen einer Kraftstofftemperatur (T) des Kraftstoffs (22),
- Erfassen eines Kraftstoffdruckes (p) des Kraftstoffs (22) stromaufwärts der Kraftstoffhochdruckpumpe (34),
**dadurch gekennzeichnet, dass**
- aus den erfassten Daten eine Diagnose des Kraftstofffördermoduls (10) durchgeführt wird, wobei zwischen einem Druckanstieg (Δp) durch eine Fehlfunktion des Kraftstofffördermoduls (10), und einem Druckanstieg (Δp) durch eine Versulzung zumindest eines Abschnitts (24, 28) des Kraftstofffördermoduls (10) unterschieden wird.

2. Verfahren nach Anspruch 1, **dadurch gekennzeichnet, dass** bei Erkennen einer Versulzung zumindest eines Abschnitts (24, 28) des Kraftstofffördermoduls (10) die Pumpendrehzahl der elektronischen Kraftstoffpumpe (12) derart begrenzt wird, dass der Druck in dem Kraftstofffördermodul (10) auf einen definierten ersten Schwellenwert (S₁) begrenzt wird.

3. Verfahren nach Anspruch 2, **dadurch gekennzeichnet, dass** der Schwellenwert (S₁) im Bereich zwischen 600 kPa und 1000 kPa liegt.

4. Verfahren nach Anspruch 2 oder 3, **dadurch gekennzeichnet, dass** bei einem Druckanstieg (Δp) über einen zweiten Schwellenwert (S₂), welcher oberhalb des ersten Schwellenwertes (S₁) liegt, eine Fehlfunktion des Kraftstofffördermoduls (10) erkannt wird.

5. Verfahren nach einem der Ansprüche 1 bis 4, **dadurch gekennzeichnet, dass** die Begrenzung der Pumpendrehzahl (n) anhand von zumindest einer in dem Steuergerät (36) abgelegten Pumpenkennlinie (48, 50) erfolgt.

6. Verfahren nach Anspruch 2 und Anspruch 5, **dadurch gekennzeichnet, dass** der erste Schwellenwert (S₁) zur Begrenzung der Pumpendrehzahl (n) aus einem Schnittpunkt (52) der Pumpenkennlinie (50) einer Saugstrahlpumpe (14) und einer Pumpenkennlinie (48) der elektronischen Kraftstoffpumpe (12) ermittelt wird.

7. Verfahren nach einem der Ansprüche 2 bis 6, **dadurch gekennzeichnet, dass** zur Ermittlung der Pumpenkennlinien (48, 50) mehrere Stützpunkte in einem Temperaturbereich im Bereich des Cloud Points ausgewertet werden.

8. Verfahren nach Anspruch 4, **dadurch gekennzeichnet, dass** oberhalb des zweiten Schwellenwertes (S₂) ein Druckbegrenzungsventil (16) des Kraftstofffördermoduls (10) geöffnet wird.

9. Verfahren nach einem der Ansprüche 1 bis 8, **dadurch gekennzeichnet, dass** zusätzlich ein Volumenstrom durch die elektronische Kraftstoffpumpe (12) erfasst wird.

10. Kraftstofffördermodul (10) zur Versorgung einer Kraftstoffhochdruckpumpe (34) eines Kraftstoffeinspritzsystems für einen Verbrennungsmotor, wobei das Kraftstofffördermodul (10) eine elektronische Kraftstoffpumpe (12), einen Temperatursensor (32), einen Drucksensor (30) und eine Versorgungsleitung (24) umfasst, welche die elektronische Kraftstoffpumpe (12) mit der Kraftstoffhochdruckpumpe (34) des Kraftstoffeinspritzsystems fluidisch verbindet, sowie mit einem Steuergerät (36), welches eingerichtet ist, ein Verfahren nach einem der Ansprüche 1 bis 9 durchzuführen.
